Europäisches Patentamt

European Patent Office

Office européen des brevets

(11) Veröffentlichungsnummer: **0 341 412**
**A1**

## (12) EUROPÄISCHE PATENTANMELDUNG

(21) Anmeldenummer: 89105824.0

(22) Anmeldetag: 03.04.89

(51) Int. Cl.⁴: **G01D 5/244 , H03M 1/00**

(30) Priorität: 10.05.88 DE 8806215 U

(43) Veröffentlichungstag der Anmeldung:
**15.11.89 Patentblatt 89/46**

(84) Benannte Vertragsstaaten:
**ES**

(71) Anmelder: **Siemens Aktiengesellschaft**
**Wittelsbacherplatz 2**
**D-8000 München 2(DE)**

(72) Erfinder: **Schwesig, Günter**
**Lange Zeile 84**
**D-8520 Erlangen(DE)**

(54) **Lagecodierter Winkelgeber.**

(57) Der lagecodierte Geber enthält eine um die Drehachse verlaufende Spur aus einem einheitlichen, magnetisch leitenden Material mit einer profilierten Oberfläche und ein Paar von Sensoren, die der Spur gegenüberstehen und den Abstand zur vorbeibewegten Profiloberfläche induktiv abtasten. Durch entsprechende Geometrie wird erreicht, daß die beiden Sensoren ungefähr sinusförmige, gegeneinander um 90° phasenverschobene Sensorsignale liefern, deren Phasenlage eine umkehrbar eindeutige Funktion des Drehwinkels ist. Ausgleichssensoren, deren Signale mit den Sensorsignalen addiert werden, können Verzerrungen, die durch ein radiales und/oder axiales Spiel der Drehachse entstehen, ausgleichen.

FIG 1

EP 0 341 412 A1

## Lagecodierter Winkelgeber

Die Erfindung betrifft einen lagecodierten Winkelgeber mit den Merkmalen des Oberbegriffs des Anspruchs 1.

Um den Drehwinkel zwischen zwei gegeneinander drehbaren Teilen, z.B. einem Werkstück und einem von einer Rotationsmaschine angetriebenen Werkzeug, zu jedem Zeitpunkt bestimmen zu können, sind meist auf dem einen Teil eine Vielzahl von Spuren mit optischen Marken angeordnet, die durch die Drehbewegung in den Strahlengang eines optischen Sensorsystems gebracht werden. Bei Bestrahlung mit einem parallelen Lichtbündel ist es gleichgültig, wenn sich durch ein axiales Spiel die Stellung der Marken parallel zum Strahlengang verschiebt. Durch entsprechende Geometrie wird die Intensität des vom Sensor ausgewerteten Lichtes auch unempfindlich gegenüber einer radialen Verschiebung bei einem radialen Spiel. Andererseits ist die Meßgenauigkeit in hohem Maße davon abhängig, daß die Marken exakt gleich sind und äquidistant längs der Spur angeordnet sind.

In der Regel werden die Sensorsignale elektronisch zu binären Impulsen geformt, deren Flanken jeweils bei den Stellungen auftreten, bei denen ein vorgegebener Bruchteil einer Marke seitlich in den Strahlengang eingetreten ist. Das Auflösungsvermögen einer Spur ist daher durch den Markenabstand vorgegeben und wenn für die konzentrisch angeordneten Spuren jeweils Marken mit doppeltem Markenabstand verwendet werden, so können durch die entsprechenden binären Sensorsignale die Bits unterschiedlicher Wertigkeit eines binären Drehwinkelsignals bestimmt werden.

Mit steigenden Anforderungen an das Auflösungsvermögen sind daher entsprechende lagecodierte optische Geber nur aufwendig herzustellen.

Bei der Steuerung von Drehfeldmaschinen ist es üblich, den Drehwinkel $\epsilon$ des Rotors durch ein Drehwinkelsignal e zu erfassen, das durch ein Signalpaar $e' = \cos \epsilon$, $e'' = \sin \epsilon$ gebildet wird. Der Drehwinkel ist also durch den Phasenwinkel dieses sinusförmigen Signalpaars bestimmt, kann aber durch die Winkelsignale in einer der vektoriellen Steuerung oder Regelung von Strom, Spannung und/oder Fluß angemessenen Form verarbeitet werden. Ist z.B. der Strom durch einen Blindstrom a1, der zur Flußachse- (bzw. bei Synchronmaschinen unter Vernachlässigung der Ankerrückwirkung: zur Rotorachse) parallel ist, und einen dazu senkrechten Wirkstrom a2 vorgegeben, so kann dieser rotorbezogene Stromvektor durch einen sogenannten "Vektordreher" gemäß der Beziehung

$$a_x = a1 \cdot e' + a2 \cdot e'' = \sqrt{a1^2 + a2^2} \cos(\varphi + \epsilon)$$
$$a_y = -a1 \cdot e'' + a2 \cdot e' = \sqrt{a1^2 + a2^2} \sin(\varphi + \epsilon)$$

in einem ständerbezogenen Koordinatensystem geschrieben werden, wobei $\sqrt{a1^2 + a2^2}$ die Stromamplitude und $\phi = \tan^{-1}(a2/a1)$ den vorgegebenen Winkel zwischen Rotorachse und Stromvektor bezeichnet.

Soll z.B. die Drehfeldmaschine mit einem bestimmten Drehmoment (Wirkstrom) und einer bestimmten, vom Blindstrom abhängigen Erregung gestartet werden, so ist es erforderlich, bereits beim Start (und entsprechend auch bei langsamer Bewegung) jederzeit den Drehwinkel $\epsilon$ zu erfassen, wozu ein lagecodierter Geber erforderlich ist.

Der Erfindung liegt die Aufgabe zugrunde, einen lagecodierten Geber zu schaffen, der auf eine rationelle Weise zu fertigen und zu montieren ist und nicht mit einem optischen Abtastverfahren arbeitet.

Diese Aufgabe wird gelöst durch einen lagecodierten Winkelgeber mit den Merkmalen des Anspruchs 1.

Die Spur kann verhältnismäßig einfach durch eine entsprechende Profilierung am Rand einer auf der Drehachse konzentrisch angeordneten Scheibe aus einem homogenen, magnetisch leitenden Material gebildet sein. Das Ausgangssignal entsprechender elektromagnetischer Sensoren ist dann eine Funktion des Abstandes zwischen dem Sensor und der Kontur der Spur, die Sensoren tasten also z.B. induktiv den Sensor/Spur-Abstand ab.

Wird insbesondere als profilierte Spur ein Zahnkranz mit m-Zähnen verwendet, so kann durch entsprechende sorgfältige Formgebung der Zähne erreicht werden, daß ein ungefähr sinusförmiges Sensorsignal

$v' = \cos(m \cdot \epsilon)$

erzeugt wird. Ein zweiter Sensor, der in Umfangsrichtung um den Winkel $\pi/2m$ versetzt ist, erzeugt ein zweites Sensorsignal

EP 0 341 412 A1

$$v'' = \sin(m \cdot \epsilon)$$

das um 90° phasenverschoben ist. Die beiden Sensorsignale $v'$, $v''$ stellen also ein Detektorsignal $\underline{v}$ dar, dessen Phasenlage eine Funktion des Drehwinkels ist, allerdings eine m-fache Vieldeutigkeit aufweist.

In der gleichzeitig angemeldeten deutschen Patentanmeldung des gleichen Anmelders mit dem Titel "Lagecodierter Geber" ist beschrieben, daß diese Vieldeutigkeit dadurch beseitigt wird, daß eine zweite Spur mit einem zweiten Sensorpaar verwendet wird, dessen entsprechendes Detektorsignal $\underline{u}$ durch

$$u' = \cos((m-1) \cdot \epsilon)$$
$$u'' \sin((m-1) \cdot \epsilon)$$

beschrieben wird. Bei Verwendung eines Zahnkranzes als zweite Spur unterscheiden sich also die Zahnzahlen beider Spuren. Ein Vektordreher kann daraus das Drehwinkelsignal $\underline{e}$ in Form der beiden Winkelfunktionen

$$e' = u' \cdot v' + u'' \cdot v'' = \cos\epsilon$$
$$e'' = -u' \cdot v'' + u'' \cdot v' = \sin\epsilon$$

bilden. Die Merkmale des entsprechenden lagecodierten Winkelgebers sind in Anspruch 2 angegeben. Um den Drehwinkel mit einem gewünschten Auflösungsvermögen zu erhalten, benötigen die einzelnen Sensoren also nur ein um den Faktor m/2 schlechteres Auflösungsvermögen.

Der Nachteil dieser elektromagnetischen Abtastung ist, daß sowohl ein Radialspiel wie ein Axialspiel eine entsprechende Verfälschung der jeweiligen Sensorsignale liefert, die jedoch durch die Merkmale der Ansprüche 3 bis 5 verhindert werden kann.

Auf die Verwendung eines Winkeldrehers zur Bildung der Phasendifferenz zwischen zwei Detektorsignalen unterschiedlicher Periodizität kann aber auch verzichtet werden, wenn der lagecodierte Winkelgeber entsprechend den Merkmalen der Ansprüche 6 bis 10 ausgebildet ist.

Anhand mehrerer Ausführungsbeispiele und Figuren sei die Erfindung näher erläutert.

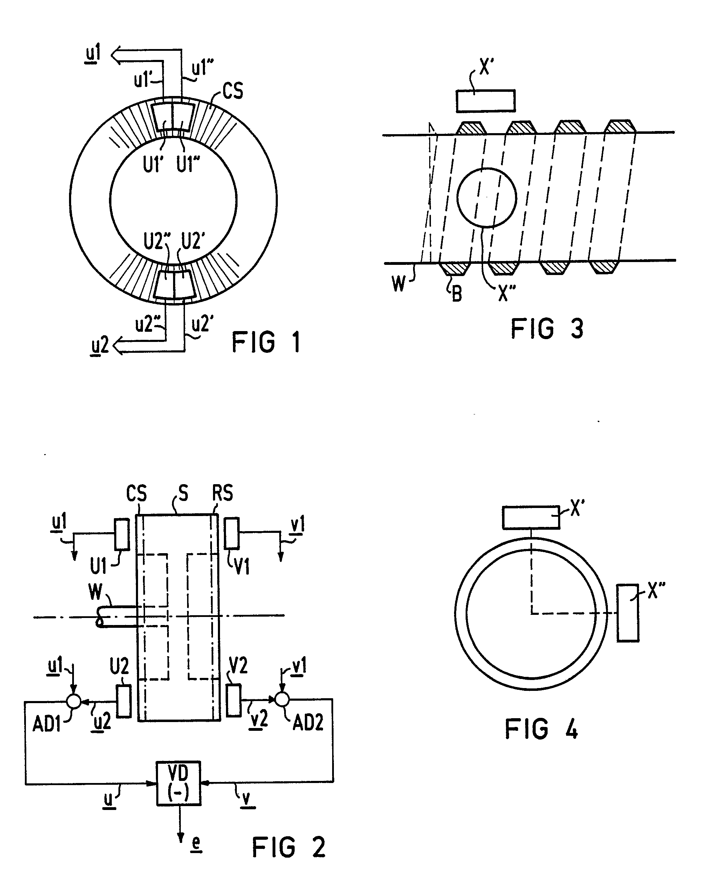

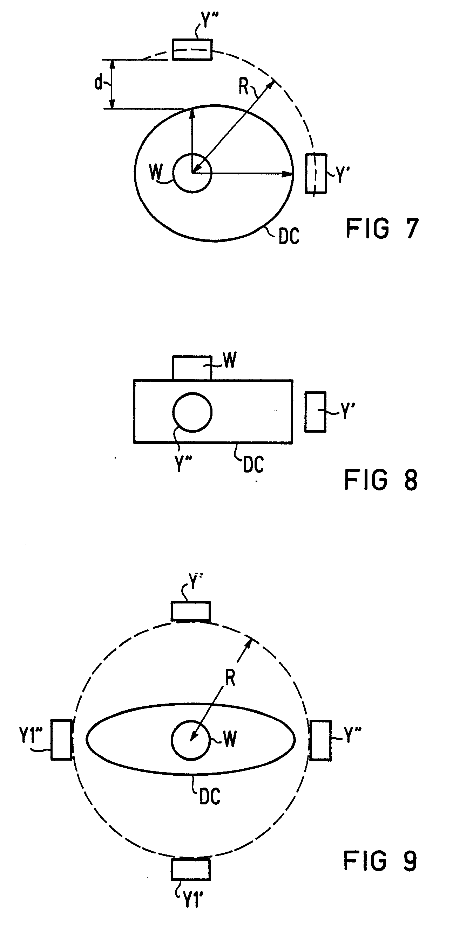

Die Figuren 1 und 2 zeigen die Variante mit zwei Spuren unterschiedlicher Periodenzahl. Bei den Figuren 3 bis 6 verläuft die Spur schraubenförmig. Die Figuren 7 bis 11 zeigen einfache Ausführungsbeispiele für eine radiale bzw. axiale Abstandsabtastung.

Die Figuren 1 und 2 zeigen in Aufsicht und Querschnitt einen lagecodierten Winkelgeber nach einer ersten Variante der Erfindung. Auf beiden Breitseiten einer um eine Drehachse W drehbaren Scheibe S sind längs des Umfanges zwei Spuren angeordnet, die aus einem homogenen magnetisch leitenden Material gebildet sind und ein Profil mit Zähnen aufweisen, die sich in radialer Richtung erstrecken und in axialer Richtung auf gegenüberliegende Sensoren gerichtet sind. Die Codespur enthält längs des Kreisumfanges m = 100 äquidistant verteilte Zähne, während die Referenzspur RS nur n = m - 1 = 99 äquidistant verteilte Zähne aufweist. Die Codespur CS wird elektromagnetisch von zwei Codesensoren U1′ und U1″ abgetastet, die entsprechend dem vorbeibewegten Profil auf den veränderlichen Abstand zwischen Sensor und Zahnoberfläche ansprechen. Die beiden Codesensoren U1′ und U1″ sind benachbart, aber derart gegeneinander versetzt, daß sie ein Paar $\underline{u1}$ von ungefähr sinusförmigen, gegeneinander um 90° phasenversetzten Sensorsignalen u1′, u1″ liefern.

Die Referenzspur RS wird in entsprechender Weise von einem Paar $V_1$ von Referenzsensoren abgetastet, die in Fig. 1 von dem Paar $U_1$ der Codesensoren U1′, U2′ verdeckt sind, da sie einander gegenüberliegen, während in Fig. 2 die beiden nebeneinanderliegenden Sensoren der beiden Sensorpaare U1 und V1 wie ein einziger Sensor erscheinen.

Die Amplitude der Sensor-Signalpaare $\underline{u1}$ und $\underline{v1}$ (d.h. die Einzelsignale u1′, u1″, v1′, v1″) wird nun verfälscht durch ein Radialspiel, das z.B. durch eine ungenaue Zentrierung auf der Drehachse W hervorgerufen sein kann. Da die beiden Sensorpaare praktisch zum gleichen Zeitpunkt am gleichen Ort diesen Verfälschungen unterworfen sind, wirkt sich dieses Radialspiel auf alle Signale gleichermaßen aus. Es kann darüber hinaus weitgehend unterdrückt werden, wenn die Sensoren kleiner als die Breite der Spur sind.

Daneben kann auch ein Axialspiel auftreten, wenn z.B. die Scheibe nicht genau senkrecht auf der Drehwelle W sitzt und daher "taumelt". Dies wirkt sich zwar auf die beiden Sensoren eines Sensorpaares praktisch in gleicher Weise aus, verstärkt aber die Amplitude eines Sensorsignalpaares, während es die Amplitude des anderen Sensorsignalpaares gleichzeitig verringert.

Daher ist bei der Variante nach den Figuren 1 und 2 vorgesehen, daß auf jeder Breitseite diametral entgegengesetzt zu einem Sensorpaar ein Paar von Ausgleichsensoren angeordnet ist, die die Spur ebenfalls abtasten und an sich die gleichen sinusförmigen Ausgangssignale liefern wie ihre zugehörigen Sensoren. Bei einem Axialspiel werden aber z.B. die Ausgangssignale u2′, u2″ der Ausgleichssensoren U2′, U2″ gerade in entgegengesetztem Sinn gestört wie die Signale u1′, u1″ der Sensoren U1′, U1″. Eine Additionseinrichtung AD1 bildet daher ein Signalpaar $\underline{u}$, das aus den beiden Einzelsignalen

$$u' = u1' + u2'$$
$$u'' = u1'' + u2''$$

3

besitzt, für das daher angesetzt werden kann,

$u' = \cos m . \epsilon$ ,

$u'' = \sin m . \epsilon$ .

In gleicher Weise liefert ein entsprechendes Ausgleichs-Sensorpaar V2, das seitlich an der Referenzspur RS angeordnet ist und dem Referenz-Sensorpaar V1 zugeordnet ist, die Einzelsignale $v2'$, $v2''$, und eine Additionseinrichtung AD2 liefert das Codesignal-Paar $\underline{v}$ mit den Einzelsignalen

$v' = v1' + v2' = \cos ((m-1) \epsilon)$

$v'' = v1'' + v2'' = \cos ((m-1) \epsilon)$

Ein Vektordreher VD- liefert daraus entsprechend den Beziehungen

$e' - u' v' - u'' v''$

$e'' u' v'' + u'' v'$

die Funktionen $e' = \cos \epsilon$ und $e'' = \sin \epsilon$ . Dieses Winkelfunktionspaar $\underline{e}$ besitzt also eine Phasenlage, die gleich dem Drehwinkel $\epsilon$ der Drehachse W ist und aus dem Winkelfunktionspaar $\underline{e}$ umkehrbar eindeutig abgeleitet werden kann. Für eine vektorielle Weiterverarbeitung des Drehwinkels stellen die beiden Winkelfunktionen bereits die geeignete Form zur Darstellung eines Drehwinkels dar, wie aus der Steuerung von Drehfeldmaschinen bekannt ist.

Bei der Ausführungsform nach den Figuren 3 bis 6 ist auf die Erhöhung des Auflösungsvermögens mittels einer zweiten Spur verzichtet, da die Phasenlage der beiden um 90° phasenversetzten Sensorsignale im allgemeinen bereits ausreichend genau ermittelt werden kann.

Die Spur kann aus einem schraubenförmig um die Drehachse gewundenen Profil, d.h. einem auf der Welle W schraubenförmig aufgewickelten Band B aus einem einheitlichen magnetisch leitenden Material bestehen, ist jedoch vorzugsweise durch Einfräsen eines Gewindeganges in einen homogenen Zylinder hergestellt. Die beiden Sensoren X und X' sind z.B. in einer zur Drehachse W senkrechten Ebene im gleichen Abstand angeordnet und gegeneinander räumlich um 90° versetzt, wie im Längsschnitt und Querschnitt der Figuren 3 und 4 gezeigt ist. Durch entsprechende geometrische Gestaltung der Sensorflächen und des Schraubenprofils wird erreicht, daß diese Sensoren X' und X'' die Ausgangssignale

$x' = \cos \epsilon$ , $x'' = \sin \epsilon$

liefern.

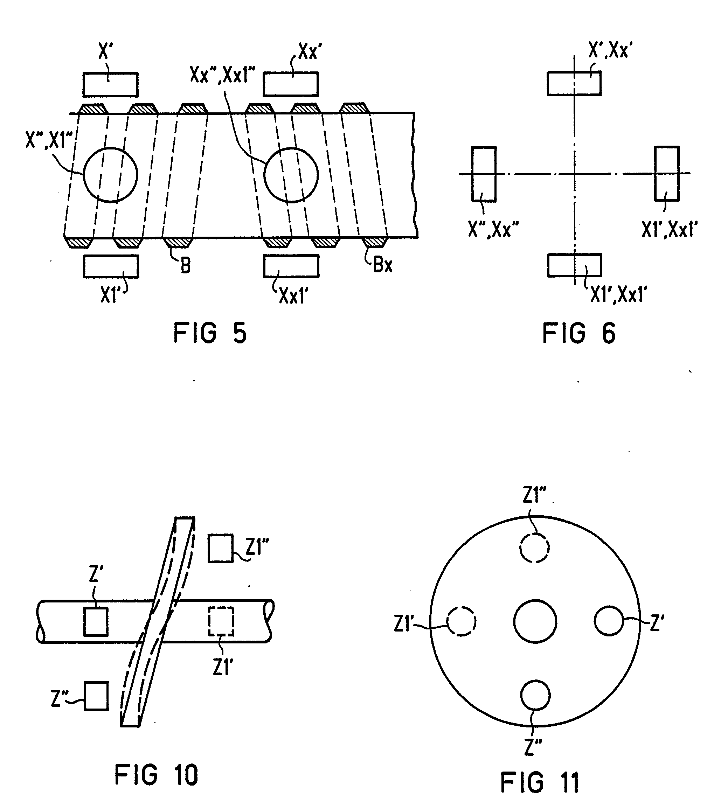

In diesem Fall kann ein Radialspiel verhindert werden, wenn, wie die Figuren 5 und 6 zeigen, jeweils diametral entgegengesetzt zur Drehachse jeweils für einen Sensor ein entsprechender Ausgleichssensor X1' und X1'' angeordnet ist und jeweils ein Sensorsignal und das Ausgangssignal des zugehörigen Ausgleichssensors addiert werden.

Um auch ein Axialspiel auszugleichen, kann vorgesehen sein, axial auf der Drehachse versetzt eine Ausgleichsspur Bx anzuordnen, die jeweils in gleicher geometrischer Anordnung von weiteren Sensoren Xx', Xx'', Xx1' und Xx1'' abgetastet wird. Die Windungsrichtung der Ausgleichsspur Bx ist jedoch entgegengesetzt zur Windungsrichtung der Spur B gewählt, so daß ein Axialspiel zwar auf den Sensoren der Spur B z.B. einen vergrößerten Drehwinkel, auf den Sensoren der Ausgleichsspur Bx jedoch einen entsprechend verkleinerten Drehwinkel vortäuscht, so daß in diesem Fall das Winkelsignalpaar $\underline{e}$ aus den entsprechenden Signalen der Sensoren gemäß den Beziehungen

$e' = x' + x1' + xx' + xx1'$

$e'' = x'' + x1'' + xx'' + xx1''$

gebildet werden kann. Die Phasenlage dieses Signalpaares $\underline{e}$ gibt dann in umkehrbar eindeutiger Weise den Drehwinkel praktisch unabhängig von einem Axialspiel und einem Radialspiel wieder.

Die Figuren 7 und 8 zeigen das Prinzip der radialen Abstandsabtastung. Im einfachsten Fall ist eine ungefähr elliptische Scheibe DC, die ganz oder wenigstens an ihrem Umfang aus einem homogenen magnetisch leitenden Material gefertigt ist, exzentrisch auf der Drehwelle W gelagert. Der Schmalseite dieser exentrischen Scheibe stehen die Sensoren Y' und Y'' gegenüber, die in einer zur Drehachse W senkrechten Ebene in gleichem Abstand R von der Drehwelle, aber längs der Drehrichtung um 90° versetzt angeordnet sind. Sind die Sensoren in axialer Richtung schmaler als die Schmalseite der Scheibe, so ist die Anordnung gegenüber einem Axialspiel unempfindlich.

Eine rein elliptische Scheibenform führt hierbei aber noch nicht zu einem befriedigenden sinusförmigen Verlauf der Sensorsignale, da deren Amplitude vom Abstand d zwischen Spur und Sensor in einer nichtlinearen Form abhängt. Um einen ausreichend großen nutzbaren Pegel des Sondensignals zu errei chen, muß dieser Abstand d während der Drehachsen-Drehung sich deutlich ändern, wodurch sich diese Nichtlinearität störend auswirken kann. Daher muß versucht werden, durch entsprechende Optimierung der Scheibenform eine Linearisierung zu erreichen, bei der die beiden Sonden jeweils ausreichend sinusförmige, um 90° gegeneinander versetzte Signale liefern.

Um die Auswirkungen eines Radialspiels zu vermindern, kann für den Fall, daß jeweils nur eine Auflösung des Winkels innerhalb einer halben Umdrehung gefordert ist, eine elliptische Scheibe entsprechend der Figur 9 vorgesehen sein, wobei jeweils für jeden Sensor ein zur Drehachse diametral entgegengesetzt angeordneter Ausgleichssensor vorgesehen ist und durch entsprechende Addition eines Sensorsignals und des zugehörigen Ausgleichssensorsignals ein Signal gebildet werden kann, das gegenüber einem Radialspiel unempfindlich ist.

Da ein hinreichendes Auflösungsvermögen und eine entsprechend exakt geformte Scheibe nur mit erheblichem Herstellungsaufwand erreichbar sind, erscheint diese einfache Ausführungsform vor allem für Anwendungen mit begrenzten Genauigkeitsanforderungen vorteilhaft.

Das Prinzip der Abtastung mit seitlich angeordneten Sensoren ist in den Figuren 10 und 11 dargestellt. Hierbei ist die Scheibe als "Taumelscheibe" ausgebildet, d.h. sie ist auf der Drehachse geneigt angeordnet, während die Sensoren in einer zur Drehachse senkrechten Ebene im gleichen Radialabstand und längs der Drehrichtung mit einem Versatz von $90°$ angeordnet sind. Durch eine entsprechende Wölbung der Scheibe, die in Bild 10 gestrichelt dargestellt ist, kann auch hier die erwähnte Linearisierung, die zu sinusförmigen Sensorsignalen führen soll, vorgenommen werden. Die Ausgangssignale $z'$ und $z''$ der beiden Sensoren $Z'$ und $Z''$ sind hierbei gegenüber einem Radialspiel unempfindlicher als die entsprechenden Sonden der Anordnung nach Figur 8, jedoch besteht nunmehr eine größere Empfindlichkeit gegenüber einem Axialspiel, das daher durch entsprechende Ausgleichssonden $Z1'$ und $Z1''$ ausgeglichen werden kann, die den Sensor/Spur-Abstand auf der anderen Breitseite der Scheibe abtasten und den Sonden $Z'$ und $Z''$ gegenüberliegen.

Das Prinzip der induktiven Abstands-Abtastung liefert somit die Möglichkeit, entsprechend den jeweiligen Anforderungen an die Genauigkeit der Lagemessung einen lagecodierten Geber herzustellen, wobei der Herstellungsaufwand den jeweiligen Erfordernissen angepaßt werden kann.

## Ansprüche

1. Winkelgeber zum Bestimmen des Drehwinkels zwischen zwei gegeneinander drehbaren Teilen, mit einem eine Spur abtastenden Sensorpaar, **dadurch gekennzeichnet,** daß die Spur von einem Profil aus einheitlichem magnetischen Material gebildet ist, das Sensorpaar den Sensor/Spur-Abstand elektromagnetisch abtastet und das Profil der Spur und die Position der Sensoren so gewählt sind, daß die Sensorsignale ungefähr sinusförmig und gegeneinander um $90°$ phasenversetzt sind.

2. Winkelgeber nach Anspruch 1, **dadurch gekennzeichnet,** daß zwei Spuren mit zwei Sensorpaaren, deren Ausgangssignale Periodenlängen im Verhältnis m/(m-1) aufweisen, vorgesehen sind und daß eine Auswerteschaltung ein Drehwinkelsignal erzeugt, dessen Phasenlage durch die Phasendifferenz der beiden von den Sensorpaaren erzeugten Signalpaare gegeben ist.

3. Winkelgeber nach Anspruch 2, **dadurch gekennzeichnet,** daß die beiden Spuren auf den Breitseiten einer Scheibe einander gegenüberliegen und einander entsprechende Sensoren der Sensorpaare einander gegenüberliegend seitlich und den Spuren angeordnet sind.

4. Winkelgeber nach Anspruch 3, **dadurch gekennzeichnet,** daß auf jeder Breitseite diametral entgegengesetzt zu einem Sensorpaar ein Paar von Ausgleichssensoren angeordnet ist und jeweils das Ausgangssignal eines Sensors und des entsprechenden Ausgleichssensors am Eingang der Auswerteschaltung addiert werden.

5. Winkelgeber nach Anspruch 3, **dadurch gekennzeichnet,** daß die Spuren breiter als die Sensoren sind.

6. Winkelgeber nach Anspruch 1, **dadurch gekennzeichnet,** daß die Spur aus einem schraubenförmig um die Drehachse gewundenen Profil besteht und die Sensoren in radialem Abstand von der Spur angeordnet sind.

7. Winkelgeber nach Anspruch 6, **gekennzeichnet durch** eine mit entgegengesetzter Windungsrichtung um die Drehachse gewundene Ausgleichsspur mit einem den Sensor/Spur-Abstand abtastenden Ausgleichssensor-Paar, das ein Paar ungefähr sinusförmiger, gegeneinander um $90°$ phasenversetzter Ausgleichssignale erzeugt, und eine Auswerteschaltung, in der jeweils ein Sensorsignal und ein Ausgleichssignal addiert wird.

8. Winkelgeber nach Anspruch 1, **gekennzeichnet durch** eine exzentrische Scheibe mit einem Rand aus dem magnetisch leitenden Material, dem die Sensoren in radialem Abstand gegenüberstehen.

9. Winkelgeber nach Anspruch 1, **gekennzeichnet durch** eine Taumelscheibe mit einer kreisförmigen Spur, der die Sensoren in axialem Abstand gegenüberstehen.

10. Winkelgeber nach einem der Ansprüche 6 bis 9, **dadurch gekennzeichnet,** daß jedem Sensor ein diametral entgegengesetzt zur Drehachse angeordneter weiterer Sensor zugeordnet ist und das Ausgangssignal dieses Sensors und des zugeordneten weiteren Sensors einer Additionseinrichtung zugeführt sind.

FIG 1

FIG 3

FIG 2

FIG 4

X'

Xx''‚Xx1''

Xx'

X''‚X1''

B

Bx

X1'

Xx1'

## FIG 5

X'‚Xx'

X''‚Xx''

X1'‚Xx1'

X1'‚Xx1'

## FIG 6

Z1''

Z'

Z1'

Z''

## FIG 10

Z1''

Z1'

Z'

Z''

## FIG 11

FIG 7

FIG 8

FIG 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 510 651 (BOSCH) <br> * Zusammenfassung; Figuren 1,4 * | 1,8,9 | G 01 D 5/244 <br> H 03 M 1/00 |
| Y | | 2-10 | |
| Y | IBM TECHNICAL DISCLOSURE BULLETIN, Band 2, Nr. 3, Oktober 1959, Seiten 18-19, New York, US; L.A. KNOX: "Magnetic vernier for shaft digitizer" <br> * Insgesamt * | 2 | |
| Y | GB-A-2 141 235 (EVERSHED) <br> * Zusammenfassung * | 2,3 | |
| Y | GB-A-1 456 091 (WABCO) <br> * Figuren * | 4,5 | |
| A | US-A-3 278 928 (LOUGHLIN et al.) <br> * Figur 12 * | 6 | |
| Y | US-A-3 998 298 (FLEAGLE) <br> * Zusammenfassung * | 6-10 | |

RECHERCHIERTE SACHGEBIETE (Int. Cl.4)

G 01 D
G 01 P
H 03 M

Der vorliegende Recherchenbericht wurde für alle Patentansprüche erstellt

| Recherchenort | Abschlußdatum der Recherche | Prüfer |
|---|---|---|
| DEN HAAG | 10-07-1989 | LLOYD P.A. |

EPO FORM 1503 03.82 (P0403)